# EUROPEAN PATENT APPLICATION

(11) **EP 1 690 784 A2**
(43) Date of publication of application: **16.08.2006**
(21) Application number: 06001627.6
(22) Date of filing: 26.01.2006
(51) Int. Cl.: B62M 9/12, B62M 25/08

(54) **Apparatus for inhibiting undesirable movement of a bicycle electrical component**

(30) Priority: 10.02.2005 JP 2005034977
(71) Applicant: SHIMANO INC., Osaka 590-8577 (JP)
(72) Inventor: Fukuda, Masahiko, Sakai, Osaka 590-8577 (JP)
(74) Representative: GROSSE BOCKHORNI SCHUMACHER

(57) **Abstract**

An apparatus for inhibiting undesirable movement of a bicycle electrical component comprises a motor (206) having an output shaft (206a) that rotates around a rotational axis, a driving member (207) disposed on the output shaft, and a driven mvember (208) that is driven by the driving member. A movement control unit (209) controls movement of the output shaft in a direction other than rotation around the rotational axis (R).

## Description

### BACKGROUND OF THE INVENTION

The present invention is directed to bicycles and, more particularly, to an apparatus for preventing undesirable movement of a bicycle electrical component.

Recently, bicycles have been equipped with various electrical components used to facilitate the operation of the bicycle. For example, various electrical devices may be used to operate the bicycle transmission or to provide an assisting force to facilitate pedaling the bicycle. See, for example, Japanese Laid-Open Patent Application No. 2004-90915.

Many bicycles have derailleur operated transmissions. Such transmissions usually include a plurality of front sprockets and a plurality of rear sprockets, wherein the plurality of front sprockets are mounted for rotation coaxially with the pedal cranks, and the plurality of rear sprockets are mounted for rotation coaxially with the rear wheel. A front derailleur is mounted to the bicycle frame in close proximity to the plurality of front sprockets to selectively engage a chain with one of the plurality of front sprockets, and a rear derailleur is mounted to the bicycle frame in close proximity to the plurality of rear sprockets to selectively engage the chain with one of the plurality of rear sprockets.

Electrical devices have been used to control such derailleur operated transmissions. A typical electrically operated derailleur, for example, comprises a housing member mounted to the bicycle, a drive unit such as a motor disposed in the housing member, a gear shift cable connected between the motor and the derailleur, a gear shift controller disposed in the housing member next to the drive unit for controlling the operation of the motor, and a shift control device typically mounted on the bicycle handlebar for providing gear shift signals. The gear shift signals may be provided automatically in response to bicycle speed or manually in response to the operation of a lever or button by the rider. The gear shift controller usually includes a control unit comprising a programmed microprocessor mounted on a flat circuit substrate such as a printed circuit board. The gear shift controller causes the motor to move the gear shift cable in response to the gear shift signals from the shift control device, thereby moving the derailleur to position the chain on the desired sprocket.

In a typical electrically controlled device, a worm gear is mounted to the tip of the motor output shaft. The worm gear engages an input gear of a gear reduction mechanism, and an output portion of the gear reduction pulls and releases the gear shift cable in response to movement of the motor output shaft. Since the helically-shaped worm gear transfers rotational power to the input gear of the gear reduction mechanism in a direction perpendicular to the rotational axis of the motor output shaft, there is a risk that the motor output shaft deflects in a direction that may cause the worm gear to contact the input gear at an undesirable angle, thereby causing locking or excessive wear of the gear teeth, or even separation of the worm gear from the input gear.

### SUMMARY OF THE INVENTION

The present invention is directed to various features of a bicycle electrical component. In one embodiment, an apparatus for inhibiting undesirable movement of a bicycle electrical component comprises a motor having an output shaft that rotates around a rotational axis, a driving member disposed on the output shaft, and a driven member that is driven by the driving member. A movement control unit controls movement of the output shaft in a direction other than rotation around the rotational axis. Additional inventive features will become apparent from the description below, and such features alone or in combination with the above features may form the basis of further inventions as recited in the claims and their equivalents.

### BRIEF DESCRIPTION OF THE DRAWINGS

Fig. 1 is a side view of a particular embodiment of a bicycle;
Fig. 2 is a detailed view of a particular embodiment of a rear derailleur;
Fig. 3 is an elevational view of a derailleur base member with the cover removed;
Fig. 4 is an exploded view of electrical components disposed within a housing member formed by the base member;
Fig. 5 is an assembled view of the electrical components disposed within the housing member together with a movement control unit;
Fig. 6 is a more detailed view of the movement control unit;
Fig. 7 is a detailed view of another embodiment of a movement control unit; and
Fig. 8 is a detailed view of another embodiment of a movement control unit.

### DETAILED DESCRIPTION OF THE EMBODIMENTS

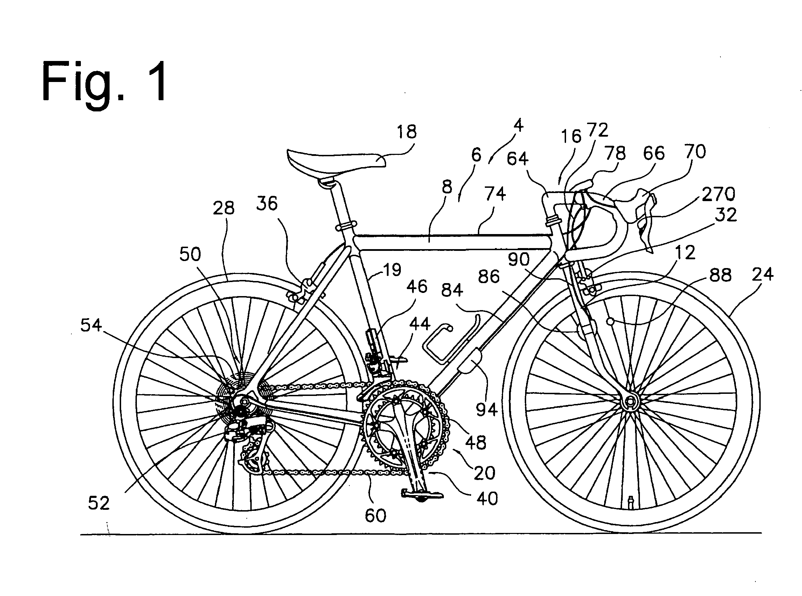

Fig. 1 is a side view of a bicycle 4. Bicycle 4 is a road bicycle comprising a diamond-shaped frame 8, a front fork 12 mounted to frame 8 for rotation around an inclined axis, a handlebar assembly 16 mounted to the upper part of fork 12, a front wheel 24 rotatably attached to the lower part of fork 12, a rear wheel 28 rotatably attached to the rear of frame 8, a saddle 18 mounted to a seat tube 19 of frame 8, and a drive unit 20. A front wheel brake 32 is provided for braking front wheel 24, and a rear wheel brake 36 is provided for braking rear wheel 28.

Drive unit 20 comprises a chain 60, a front sprocket assembly 44 coaxially mounted with a pedal-operated crank 40, an electrically controlled front derailleur 46 attached to seat tube 19, a rear sprocket assembly 50 coaxially mounted with rear wheel 28, and an electrically controlled rear derailleur 52. Front sprocket assembly 44 comprises a plurality of (e.g., two) coaxially mounted sprockets 48, and rear sprocket assembly 50 comprises a plurality of (e.g., eight to ten) sprockets 54. Front derailleur 46 moves to a plurality of operating positions to switch chain 60 among the plurality of front sprockets 48, and rear derailleur 52 moves to a plurality of operating positions to switch chain among selected ones of the plurality of rear sprockets 54.

A handlebar stem 64 is mounted to the upper portion of front fork 12, and a drop-style handlebar 66 is mounted to a front portion of handlebar stem 64. A combined brake and shift control device 70 with a gear shift switch 270 mounted behind a brake lever is mounted the right side of handlebar 66. A similar combined brake and shift control device 70 is mounted to the left side of handlebar 66. The gear shift switches 270 may comprise lever-type switches, for example, and upshift or downshift operations may be performed by moving the switches in different directions. The right side brake and shift control device 70 controls the operation of rear brake 36 through a Bowden cable 74, and the left side combined brake and shift control device 70 controls the operation of front brake 32 through a Bowden cable 72. Gear shift switch 270 on the right side brake and shift control device 70 controls the operation of rear derailleur 52, and gear shift switch 270 on the left side brake and shift control device 70 controls the operation of front derailleur 46.

A cycle computer 78 receives electrical gear shift command signals from gear shift switches 270 as well as speed indicating signals from a wheel speed sensor 86 through electrical wiring 90. Wheel speed sensor 86 may comprise a reed switch that provides an electrical pulse in response to the passage of a magnet 88 mounted to front wheel 24. Cycle computer 78 includes a conventional display for displaying information such as speed and travel distance based on the signals from wheel speed sensor 86. Cycle computer 78 communicates control signals for operating front and rear derailleurs 46 and 52 through electrical wiring 84. Cycle computer 78 also receives power signals from a power supply 94 through electrical wiring 84. Power supply 94 may comprise a replaceable primary or secondary battery.

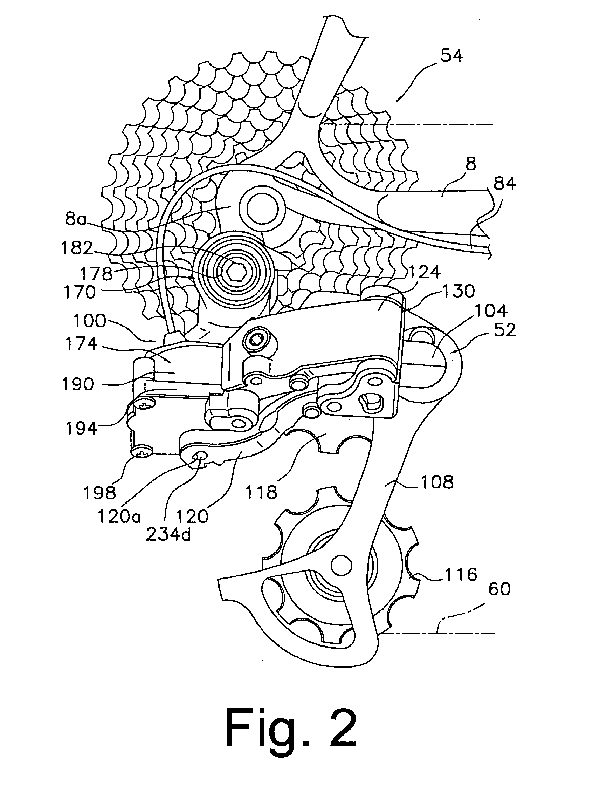

As shown in Fig. 2, rear derailleur 52 includes a base member 100 secured to a rear part 8a of frame 8, a moving mechanism 130 that can move toward or away from rear wheel 28 relative to base member 100, a movable member 104 connected to moving mechanism 130, and a chain guide 108 pivotably connected to movable member 104. Base member 100 includes an essentially cylindrical frame mounting unit 170 and a housing unit 174. Frame mounting unit 170 includes a bolt mounting opening 178. Base member 100 is secured to frame body 8 by a frame mounting bolt 182 that passes through bolt mounting opening 178 such that the rotational position of base member 100 may be adjusted.

Moving mechanism 130 comprises a first link member 120 and a second link member 124 positioned outside of first link member 120, wherein a first end of each of first link member 120 and second link member 124 is connected to base member 100. Link members 120 and 124 are disposed essentially parallel to each other. A second end of each first link member 120 and second link member 124 is pivotably connected to movable member 104. A biasing member (not shown) comprising a torsion spring, for example, is mounted between movable member 104 and chain guide 108 for biasing chain guide 108 clockwise in Fig. 2 in a conventional manner. Chain guide 108 rotatably supports a guide pulley 118 and a tension pulley 116, wherein guide pulley 118 guides chain 60 to engage selected ones of the plurality of rear sprockets 54, and tension pulley 116 applies tension to chain 60.

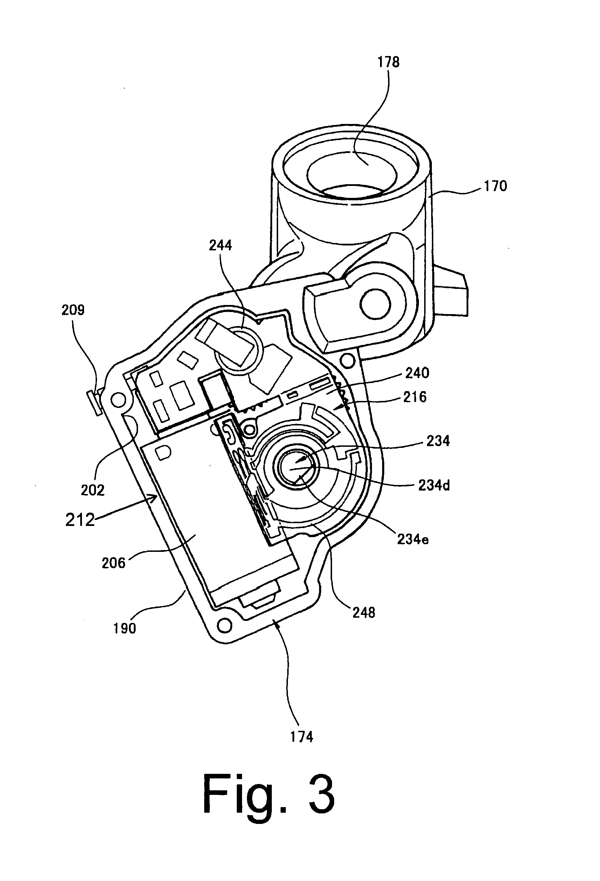

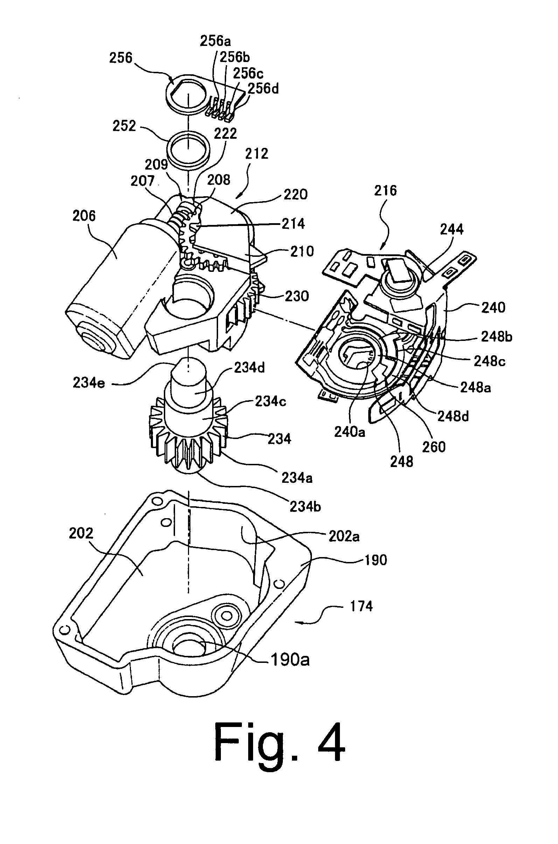

Housing unit 174 includes a housing member 190 and a cover 194 that is mounted to housing member 190 by screws 198. Housing member 190 is integrally formed with frame mounting unit 170. Cover 194 preferably is secured to the bottom of housing member 190 so that water and other contaminants do not enter the interior of housing member 190. As shown in Figs. 3 and 4, housing member 190 defines a drive mechanism housing space 202 for housing internal components such as a gear shift drive unit 212 and a gear shift control circuit 216 that controls gear shift drive unit 212. Gear shift drive unit 212 electrically drives rear derailleur 52 so that chain guide 108 engages chain 60 with any one of the rear sprockets 54.

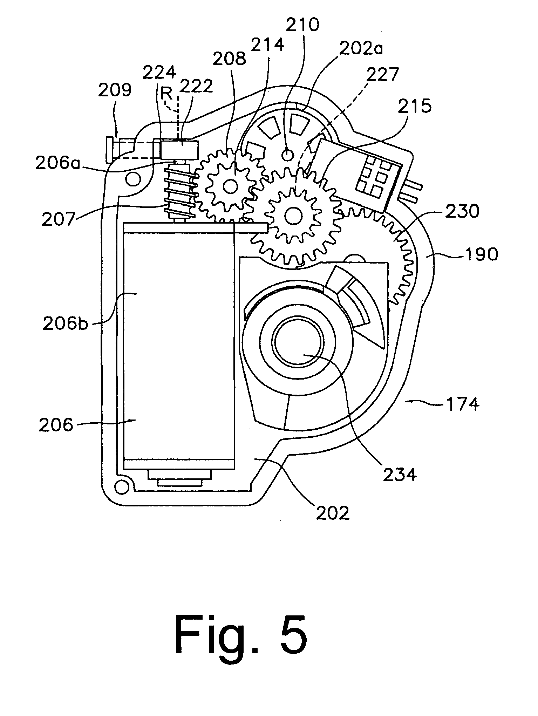

As shown in Figs. 4 and 5, gear shift drive unit 212 comprises an electric motor 206, a movement control unit 209 and a speed reduction mechanism 210, wherein motor 206 is disposed to one side of drive mechanism housing space 202. A driving member in the form of a first gear such as a worm gear 207 is mounted on an output shaft 206a that extends externally from a motor body 206b of motor 206, and a bearing 222 such as a cartridge ball bearing is mounted to the tip of output shaft 206a. Worm gear 207 meshes with a driven member in the form of a second gear such as a worm wheel 208.

Speed reduction mechanism 210 comprises a third gear 214 that is integrally formed with worm wheel 208. Third gear 214 has a smaller diameter than worm wheel 208, and both components are rotatably supported to a gear support member 220. A fourth gear 215 is integrally formed with a fifth gear 227, wherein fourth gear 215 has a larger diameter than fifth gear 227, and both components also are rotatably supported to gear support member 220. Fourth gear 215 meshes with third gear 214, and fifth gear 227 meshes with a sixth gear 230 that is rotatably supported to gear support member 220. Fifth gear 227 has a smaller diameter than sixth gear 230. As a result of the foregoing structure, speed reduction mechanism 210 can be attached or detached as a single unit by attaching or detaching gear support member 220 to or from housing member 190.

Sixth gear 230 engages an output gear 234a of an output shaft unit 234. Output shaft unit 234 further comprises a pivot shaft 234b, an intermediate shaft 234c and an output shaft 234d. Pivot shaft 234b is pivotably supported by a recess 190a in housing member 190. Intermediate shaft 234c is integrally formed with output gear 234a, and output shaft 234d extends from intermediate shaft 234b to a location outside of housing unit 174. Output shaft 234d includes a beveled area (flat) 234e that engages a beveled area (flat) 120a (Fig. 2) on first link member 120 for communicating the rotational force of motor 206 to first link member 120.

Movement control unit 209 controls movement of output shaft 206a in a direction other than rotation around a rotational axis R of output shaft 206a (Fig. 5), although some control over rotation around rotational axis R may be performed as well. In particular, movement control unit 209 inhibits separation of worm gear 207 from worm wheel 208, and it does this by inhibiting movement of output shaft 206a at least partly in a direction perpendicular to rotational axis R. More specifically, movement control unit 209 is continuously adjustable in a direction so that worm gear 207 moves toward and away from worm wheel 208. Movement control unit 209 may directly or indirectly contact output shaft 206a. In this embodiment, movement control unit 209 indirectly contacts output shaft 206a through bearing 222.

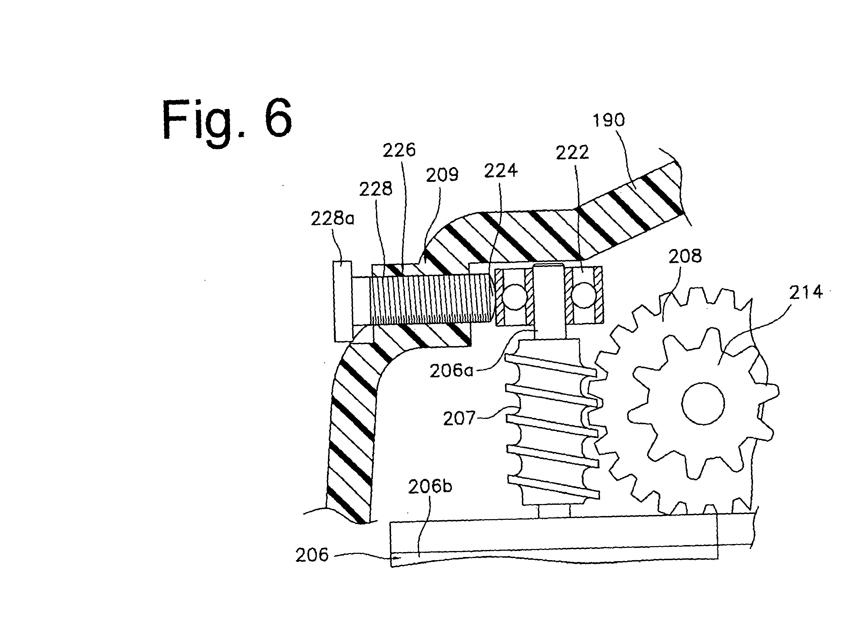

As shown in Figs. 5 and 6, movement control unit 209 comprises an adjusting screw 226 with an interface member 224 formed at a tip thereof. Adjusting screw 226 comprises a threaded shaft 228 and a head 228a. Threaded shaft 228 threadingly engages a threaded opening in housing member 190, and head 228a is disposed outside of housing member 190 so that adjusting screw 226 may be accessed by the user. In this embodiment, adjusting screw 228 advances and retracts interface member 224 in a direction substantially perpendicular to rotational axis R. Interface member 224 directly contacts the outer peripheral surface of bearing 222.

Gear shift control circuit 216 controls the operation of motor 206 and speed reduction mechanism 210 in response to upshift and downshift signals received from switches 270 mounted on the combined brake and shift control devices 70. As shown in Fig. 4, gear shift control circuit 216 comprises a circuit mounting member 240 that supports various electronic circuit elements such as microprocessors, memory, other types of LSI chips, and individual electronic circuit elements such as resistors, capacitors, conductive traces, and so on. A power storage element 244 such as a large-capacity condenser is mounted to circuit mounting member 240 for storing operating power received from power supply 94 (Fig. 1).

A through-hole 240a is formed in circuit mounting member 240 for receiving output shaft 234d therethrough, and a rotation position detector circuit element 248 is disposed in close proximity to through-hole 240a. In this embodiment, rotation position detector circuit element 248 comprises four concentric arc-shaped conductive traces 248a-248d having different radii and lengths. Another rotation position detector circuit element in the form of a contact brush 256 is non-rotatably mounted to output shaft 234d through an insulating washer 252. Brush 256 has four conductive brush contacts 256a-256d, each of which selectively contacts an associated one of the conductive traces 248a-248d when output shaft 234d is located at different rotational positions. The rotational position of output shaft 234d, and hence the gear position of chain guide 108, may be determined by which combination of conductive traces 248a-248d is being contacted by brush contacts 256a-256d. Brush 256 and conductive traces 248a-248d thus form a gear position sensor 260.

In this embodiment, circuit mounting member 240 is a one-piece flexible member comprising a pliable synthetic resin that is formed in a bent fashion such that it covers three sides of gear support member 220 and conforms to an inner wall 202a of housing member 190. As a result of the configuration of circuit mounting member 240, motor 206, speed reduction mechanism 210 and gear shift control circuit 216 are disposed within the small drive mechanism housing space 202 in a very compact fashion, even when relatively large circuit elements, such as microprocessors, are used. Since a smaller drive mechanism housing space 202 is needed, the size and weight of the overall derailleur is reduced accordingly.

When motor 206 is activated in response to a shift command from one of the switches 270, the rotation of output shaft 206a is transmitted to worm gear 207 and worm wheel 208, and the rate of rotation is reduced by speed reduction mechanism 210. Rotational power then is communicated to link 120 of rear derailleur 52 through output shaft 234d to operate rear derailleur 52 such that chain guide 108 switches chain 60 to the desired rear sprocket 54. As output shaft 206a rotates, there is a risk that worm gear 207 will tend to separate from worm wheel 208 as a result of the resistance to rotation from the various components under load. However, contact between interface member 224 and bearing 222 inhibits such movement. Furthermore, since the position of interface member 224 toward and away from bearing 222 can be adjusted by adjusting screw 228, undesirable movement of output shaft 206a can be prevented optimally depending upon the operating environment.

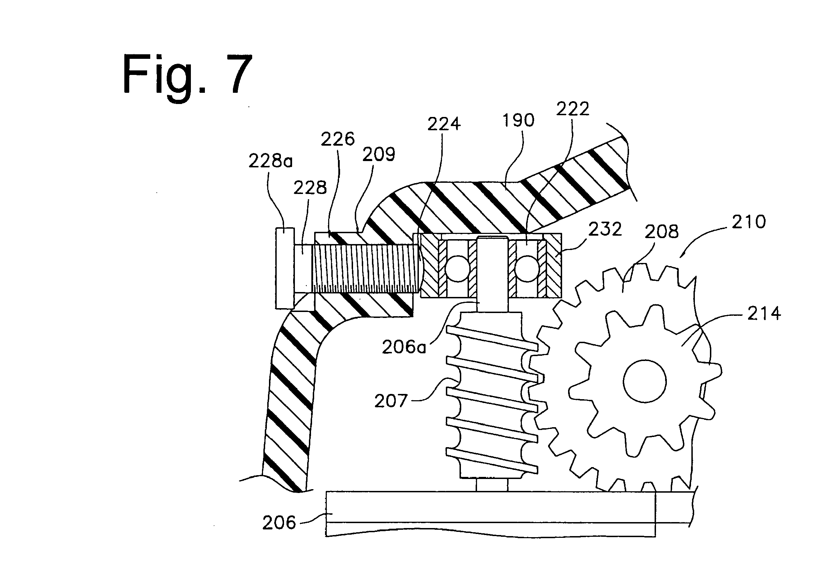

Fig. 7 is a detailed view of another embodiment of a gear shift drive unit 212. In this embodiment, bearing 222 is mounted at least partially within a bearing housing 232, and interface member 224 directly contacts bearing housing 232. Bearing housing 232 may have a rectangular cross section so that one surface thereof is arranged along the inside wall 202a of drive mechanism housing space 202 of housing member 190. In this case, since interface member 224 does not directly contact bearing 222, movement of output shaft 206a can be prevented more steadily.

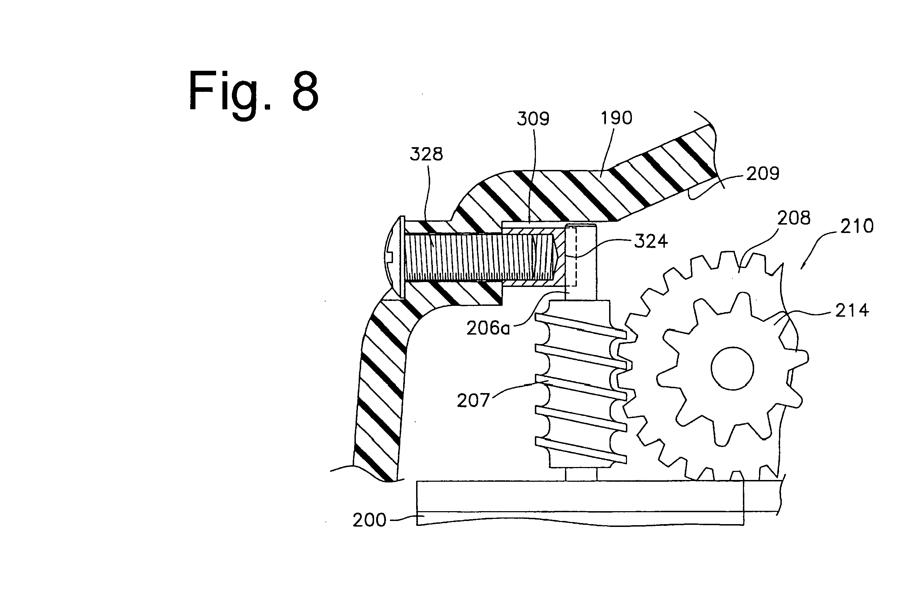

Fig. 8 is a detailed view of a movement control unit 309. In this embodiment, movement control unit 309 is not adjustable in the manner previously described. Instead, an interface member 324 is coupled to inside wall 202a of housing member 190 by a bolt 328. An arc-shaped tip of interface member 324 directly contacts the outer peripheral surface of output shaft 206a. In this embodiment, interface member 324 comprises a block made of a synthetic resin or a metal which has a low coefficient of friction, such as polytetrafluoroethylene or gunmetal. While the position of interface member 324 cannot be adjusted in the manner disclosed for the first embodiment, undesirable movement of output shaft 206a can be prevented by a simple construction.

While the above is a description of various embodiments of inventive features, further modifications may be employed without departing from the spirit and scope of the present invention. For example, while a movement control unit was applied to a device wherein a motor unit is integrally formed with the derailleur, the teachings herein may be applied to a device wherein the motor unit is separate from the derailleur but connected thereto by a cable. The movement control unit may be applied to devices that operate a front derailleur, an internal hub transmission, a suspension unit, an auxiliary power device, etc.. While a worm gear and worm wheel arrangement was disclosed, the teachings herein may be applied to many different drive mechanisms.

The size, shape, location or orientation of the various components may be changed as desired. Components that are shown directly connected or contacting each other may have intermediate structures disposed between them. The functions of one element may be performed by two, and vice versa. The structures and functions of one embodiment may be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the scope of the invention should not be limited by the specific structures disclosed or the apparent initial focus or emphasis on a particular structure or feature.

## Claims

1. An apparatus for inhibiting undesirable movement of a bicycle electrical component comprising:
a motor (206) having an output shaft (206a) that rotates around a rotational axis (R); a driving member (207) disposed on the output shaft (206a);
a driven member (208) that is driven by the driving member (207); and
a movement control unit (209) that controls movement of the output shaft (206a) in a direction other than rotation around the rotational axis (R).

2. The apparatus according to claim 1 wherein the movement control unit (209) directly contacts the output shaft (206a).

3. The apparatus according to claim 1 wherein the movement control unit (209) indirectly contacts the output shaft (206a).

4. The apparatus according to claim 1 wherein the driving member (207) comprises a first gear (207), and wherein the driven member (208) comprises a second gear (208) that meshes with the first gear (207).

5. The apparatus according to claim 4 wherein the first gear (207) comprises a worm gear.

6. The apparatus according to claim 1 wherein the movement control unit (209) inhibits separation of the driving member (207) from the driven member (208).

7. The apparatus according to claim 1 wherein the movement control unit (209) inhibits movement of the output shaft (206a) at least partly in a direction perpendicular to the rotational axis (R).

8. The apparatus according to claim 1 wherein the movement control unit (209) is adjustable in a direction so that the driving member (207) moves toward the driven member (208).

9. The apparatus according to claim 8 wherein the movement control unit (209) is continuously adjustable.

10. The apparatus according to claim 9 wherein the movement control unit (209) comprises a screw (226).

11. The apparatus according to claim 1 wherein the motor (206) comprises a motor body (206b) through which the output shaft (206a) extends, and wherein the movement control unit (209) operates on the output shaft (206a) at a location outside of a portion of the motor body (206b) through which the output shaft (206a) extends.

12. The apparatus according to claim 11 wherein the driving member (207) is disposed between the motor body (206b) and the location at which the movement control unit (209) operates on the driving member (207).

13. The apparatus according to claim 1 further comprising a bearing (222) disposed on the output shaft (206a), wherein the movement control unit (209) engages the bearing (222).

14. The apparatus according to claim 13 wherein the bearing (222) is disposed in close proximity to a tip of the output shaft (206a).

15. The apparatus according to clam 13 wherein the bearing (222) is housed at least in part in a bearing housing (232), and wherein the movement control unit (209) contacts the bearing housing (232).

16. The apparatus according to claim 1 wherein the movement control unit (209) comprises:
a screw (226) having a tip that is adjustable in a direction so that the driving member (207) moves toward the driven member (208); and
an interface member (224, 324) disposed at the tip for engaging the output shaft (206a).

17. The apparatus according to claim 16 wherein the interface member (224, 324) directly contacts the output shaft (206a).

18. The apparatus according to claim 1 further comprising a gear reduction mechanism (210) that reduces a rotational speed of the driven member (208).

19. The apparatus according to claim 1 wherein the apparatus comprises a derailleur driving apparatus.

20. The apparatus according to claim 19 wherein the motor (206) is housed within a base member (100) of a derailleur (52), and wherein the driven member (208) is coupled to an output shaft (206a) that rotates a link (120) of the derailleur.
